# EUROPEAN PATENT APPLICATION

(11) **EP 4 711 292 A1**
(43) Date of publication of application: **18.03.2026**
(21) Application number: 24200630.2
(22) Date of filing: 16.09.2024
(51) Int. Cl.: B65B 13/22, B29C 65/00, B65B 13/32, B65B 51/10

(54) **STRAPPING DEVICE**

(71) Applicant: Fromm Holding AG, 6312 Steinhausen (CH)
(72) Inventor: TROPMANN, Igor, 77652 Offenburg (DE); FREI, Waldemar, 77955 Ettenheim (DE); KOHLER, Klaus, 77830 Bühlertal (DE)
(74) Representative: Schaad, Balass, Menzl & Partner AG

(57) **Abstract**

A strapping device (100) for strapping one or more articles with a strap is described, comprising a tensioning apparatus (2) for tensioning the strap around the one or more articles, a joining apparatus (1) for joining two overlapping portions of the strap, wherein the joining apparatus (1) comprises a heating blade (11) insertable between the two overlapping portions of the strap and a joining plunger (12) configured to press the two overlapping portions of the strap onto each other, the strapping device (100) further comprising a cam shaft (3) operatively coupled with the heating blade (11) such that the heating blade (11) is movable by the cam shaft (3), a motor operatively coupled with the cam shaft (3) and configured to drive the cam shaft (3), and a controller (4) connected with the motor and configured to control the speed of rotation of the cam shaft (3), wherein the controller (4) is further connected with the heating blade (11) and configured to control an operating temperature of the heating blade (11).

## Description

### Field of the invention

The present invention relates to a strapping device for strapping one or more articles with a strap and a method of operating a strapping device.

### Background of the invention

Strapping devices are used for packing various articles by placing a strap around the articles such that two portions of the strap overlap each other by forming a loop around the articles. The overlapping portions of the strap are connected to each other by a strapping device which is applied to tension the strap and to join the overlapping portions of the strap. For tensioning the strap, a tensioning apparatus with a tensioning wheel is used which can be lowered onto the strap in order to contact the strap for tensioning and raised from the strap in order to release or to introduce the strap.

Various joining techniques can be used for joining the overlapping portions, such as for example welding, crimping, gluing etc., the specific technique depending on the articles to be strapped and/or the material of the strap. For joining the overlapping portions of the strap, a welding crimper can be lowered onto the strap in order to join the overlapping portions of the strap and raised from the strap in order to release or to introduce the strap. In another example, a heating blade can be used for joining the overlapping portions of the strap. For joining the overlapping portions of the strap, the heating blade is typically heated and briefly introduced between the overlapping portions. Due to the high temperature of the heating blade, the overlapping portions of the strap are partially melted and can be joined by pressing the overlapping portions onto each other. Joining the strap by using a heating blade, however, is prone to overheating leading to the generation of undesired vapors or smoke. On the other hand, joining the strap at a too low temperature of the heating blade may lead to an insufficient heating of the strap resulting in unreliable joining of the overlapping portions of the strap.

### Summary of the invention

While packing articles, it is desired to obtain a stable strapping with an efficient and reliable joining of the strap. In particular, it is desired to provide a versatile strapping device which may be adapted to a plurality of types of straps while ensuring reliability of the respective strap joint.

It is therefore an object of the invention to provide a strapping device which at least partially improves the prior art and avoids at least part of the disadvantages of the prior art.

According to the present invention, this object is achieved by the features of the independent claims. In addition, further advantageous embodiments follow from the dependent claims and the description as well as the figures.

According to an aspect of the invention, this object is particularly achieved by a strapping device for strapping one or more articles with a strap, comprising a tensioning apparatus for tensioning the strap around the one or more articles, a joining apparatus for joining two overlapping portions of the strap, wherein the joining apparatus comprises a heating blade insertable between the two overlapping portions of the strap and a joining plunger configured to press the two overlapping portions of the strap onto each other, the strapping device further comprising a cam shaft operatively coupled with the heating blade such that the heating blade is movable by the cam shaft, a motor operatively coupled with the cam shaft and configured to drive the cam shaft, and a controller connected with the motor and configured to control the speed of rotation of the cam shaft, wherein the controller is further connected with the heating blade and configured to control an operating temperature of the heating blade.

By rotating the cam shaft, the heating blade can therefore be moved in between the overlapping portions of the strap for heating and again removed therefrom before joining the overlapping portions. The controller configured to control the speed of rotation of the cam shaft by controlling the motor driving the cam shaft provides the advantage that the movement of the heating blade can better be controlled and adjusted, respectively, depending on the specific requirements, for example depending on the particular strap being used. For example, the speed of rotation of the cam shaft may be controlled to adjust the insertion and/or removal speed of the heating blade between the overlapping portions of the strap. The rotation of the cam shaft may also be halted, for example in order to keep the heating blade for a certain time in between the overlapping portions of the strap. The strapping device with the controller therefore provides the advantage of an improved adjustability of the joining process, enabling to obtain a more efficient and reliable strap joint adapted to the specific strapping requirements. Together with the control on the operating temperature, the adaptability of the joining process can further be improved, as the movement of the heating blade and the operating temperature can independently be controlled by the controller.

The joining parameters can therefore readily be adapted to the type of strap being used, depending on e.g. the material (for example polypropylene or polyethylene terephthalate), geometry (for example thickness and/or width of the strap) etc.

The controller may comprise a central control unit such as a high-level controller and one or more ancillary control units configured to control different components of the strapping device. One of the ancillary control units may for example be dedicated to controlling the motor. The motor may be a servomotor. The controller may for example comprise a central control unit such as a PLC (programmable logic controller) and a servo controller of a servo drive having the servo controller and a servomotor. The central control unit may control the speed of rotation of the cam shaft by outputting the requested speed of rotation, wherein the servo controller may receive a signal of the central control unit for the requested speed of rotation and accordingly control the servomotor such that the cam shaft may be driven with the requested speed of rotation.

In particular, the strapping device provides the advantage that the joining process can be controlled by adjusting the movement of the heating blade while keeping the operating temperature at an intermediate temperature sufficiently low to avoid overheating and possible generation of vapor or smoke.

The joining plunger may be configured to press an upper portion of the two overlapping portions of the strap onto the heated heating blade. By pressing the upper portion of the two overlapping portions of the strap onto the heating blade, the joining plunger may further press the heating blade onto a lower portion of the two overlapping portions of the heating blade. By doing so, the joining plunger may improve the contact between the heating blade and the upper portion and lower portion of the two overlapping portions of the strap where in between the heating blade is arranged. Thereby, the efficiency of heating the straps can be increased.

The heating blade may be spring supported. The heating blade may therefore be movable by an external force, for example exerted by the joining plunger and return into its original position after removal of the external force. The spring support may in particular be advantageous when the joining plunger presses the upper portion of the two overlapping portions of the strap onto the heating blade such that the heating blade may simultaneously also be pressed onto the lower portion of the two overlapping portions of the strapped.

After heating of the overlapping portions of the strap, the joining plunger may be lifted such that the heating blade can be removed from between the overlapping portions of the strap. The joining plunger may be lifted by a small amount in order to enable removal of the heating blade. In particular, the joining plunger may not be required to return to its idle position such that the distance to move for the joining plunger for pressing the overlapping portions of the strap onto each other after removal of the heating blade can be kept small.

After removal of the heating blade, the heated overlapping portions of the strap may be pressed onto each other by the joining plunger, resulting in joining of the overlapping portions of the strap.

The strapping device may comprise a user interface such as a control panel comprising one or more user input buttons by which the controller can be accessed by a user. The user input buttons may comprise for example physical push buttons and/or input fields on a display. The display may comprise a touch screen.

In some embodiments, the controller is configured to control the temporal profile of the speed of rotation of the cam shaft.

The controller may therefore not only set a certain speed of rotation of the cam shaft, but also a profile of the speed of rotation of the cam shaft over time which further improves the adjustability of the joining process. In particular, the controller may therefore also control the acceleration and/or deceleration of the rotation of the cam shaft and thereby of the heating blade.

In some embodiments, the controller is configured to receive a joining time as an input parameter and to control the speed of rotation of the cam shaft using the joining time.

The controller may therefore control the speed of rotation of the cam shaft depending on the joining time which in turn may depend on the specific strap being used.

The controller may set a single speed of rotation depending on the joining time and control the cam shaft to continuously rotate with a constant speed of rotation.

Setting a speed of rotation may, however, also comprise the controller setting a speed of rotation varying over time, i.e. a temporal profile of the speed of rotation of the cam shaft.

The joining time and/or the strap type may be input by a user using the user interface. In some embodiments, the user may input a strap type using the user interface and the controller may get a joining time from a data store having stored therein a plurality of joining times defined for different strap types. The user may select from a plurality of joining times and/or strap types displayed in the user interface or enter the joining time and/or the strap type in a dedicated input field of the user interface. The joining time used by the controller may be a joining time defined for a specific welding temperature.

In some embodiments, the controller is configured to receive a joining time as an input parameter and to set a joining-time-dependent speed of rotation of the cam shaft using the joining time, wherein the controller is configured to control the cam shaft to rotate with the joining-time-dependent speed of rotation such that the heating blade is inserted between the overlapping portions of the strap and removed therefrom by the cam shaft rotating with the joining-time-dependent speed of rotation.

By controlling the speed of rotation of the cam shaft to allow sufficient time to heat the overlapping portions of the strap, it may, in particular, not be necessary to halt the heating blade between the overlapping portions of the strap. Therefore, the cam shaft and accordingly, the heating blade may be moved in a continuous fashion. Driving the cam shaft in a continuous fashion may simplify the control of the strapping device by the controller. Moving the heating blade in a continuous fashion between the overlapping portions of the strap may be advantageous for straps with a low melting point and/or thin and/or narrow straps where a brief heating of the strap may be sufficient for reliable joining.

Setting a joining-time-dependent speed of rotation of the cam shaft using the joining time and controlling the cam shaft to rotate with the joining-time-dependent speed of rotation may include rotating the cam shaft with a constant joining-time-dependent speed of rotation or rotating the cam shaft with a joining-time-dependent speed of rotation varying over time, i.e. controlling the temporal profile of the speed of rotation of the cam shaft.

In some embodiments, the controller is configured to set a joining-time-dependent dwell time, wherein the controller is configured to control the cam shaft to intermittently rotate the cam shaft, interrupting rotation over the dwell time such that the heating blade is holdable between the overlapping portions of the strap over the dwell time by the cam shaft.

Depending on the type of strap being used, the controller may therefore control the cam shaft such that the heating blade stays between the overlapping portions of the strap for a defined dwell time and heats the overlapping portions in a static fashion. This may be advantageous for straps with a comparatively high melting point with respect to the operating temperature of the heating blade and/or thick and/or wide straps where a continuous and thus too brief insertion of the heating blade between the overlapping portions of the strap may not be sufficient to obtain a reliable strap joint or where the operating temperature would have to be set to a too high value where overheating could occur. The controller may recognize a strap with a comparatively high melting point based on the joining time and set a dwell time if the joining time exceeds a certain threshold joining value. In some embodiments, the controller is configured to receive a strap-specific welding temperature and to set an operating temperature of the heating blade below or to a strap-dependent threshold temperature using the strap-specific welding temperature.

The controller may therefore set the operating temperature of the heating blade to an intermediate temperature to avoid overheating of the strap. The strap-dependent threshold temperature may depend on the strap-specific welding temperature and may be lower than the melting point of the strap being used. The controller may be configured to determine the strap-dependent threshold temperature based on the strap-specific welding temperature, for example by a predefined offset from the strap-specific welding temperature or by obtaining the strap-dependent threshold temperature from a table stored in a data store of the strapping device. In some embodiments, the strap-dependent threshold temperature may be set at the strap-specific welding temperature. In some embodiments, the strap-specific welding temperature may be the melting point of the strap being used. The controller may receive the strap-specific welding temperature by a user input at the user interface.

In some embodiments, the cam shaft is operatively coupled with the joining plunger such that the joining plunger is movable by the cam shaft.

The cam shaft may therefore advantageously be used to actuate the joining plunger. Furthermore, the controller controlling the movement of the cam shaft may be used to control the pressing time over which the joining plunger presses the overlapping portions of the strap onto each other.

In some embodiments, the controller is configured to set the operating temperature of the heating blade to a cleaning temperature below a strap residue burn-off temperature, preferably below a strap-specific welding temperature, wherein the strapping device comprises a cleaning plunger configured to press at least one of the overlapping portions of the strap onto the heating blade over a cleaning time set by the controller.

By keeping the cleaning temperature below the strap residue burn-off temperature, the heating blade can be cleaned while reducing or avoiding overheating and the generation of undesired vapor or smoke. The cleaning efficiency can however be maintained or improved by pressing at least one of the overlapping portions of the strap onto the heating blade and by adjusting the cleaning time. The residues may then adhere to the strap when the heating blade is removed after the cleaning time, resulting in a cleaned heating blade.

Preferably, the cleaning time is longer than a joining time of the overlapping portions of the strap.

By increasing the cleaning time, the efficiency of removing residues from the heating blade can be improved. Furthermore, the cleaning temperature may be decreased such that overheating can further be reduced or avoided.

In some embodiments, the joining plunger is configured to press at least one of the overlapping portions of the strap onto the heating blade over a cleaning time set by the controller.

Thus, instead of having a separate joining plunger and cleaning plunger, the joining plunger may be configured to execute both functions of pressing the heated overlapping portions of the strap onto each other for forming a strap joint and of pressing at least one of the heated portions of the strap onto the heating blade over the cleaning time for cleaning the heating blade.

According to a further aspect, the present invention is also directed to a method of operating a strapping device according to the present disclosure, comprising the steps of: heating the heating blade to an operating temperature; inserting the heating blade between two overlapping portions of the strap by moving the heating blade by rotating the cam shaft with a speed of rotation; removing the heating blade from between the two overlapping portions of the strap; pressing the two overlapping portions of the strap onto each other by a joining plunger; wherein the controller controls the operating temperature of the heating blade and the speed of rotation of the cam shaft.

The order of the steps can be changed if needed and feasible. For example, the heating blade may be inserted first between the overlapping portions of the strap and then heated to the operating temperature.

In some embodiments, the joining plunger presses an upper portion of the two overlapping portions of the strap onto the heated heating blade and the heating blade onto a lower portion of the two overlapping portions of the strap after inserting the heating blade between the two overlapping portions of the strap. Before removing the heating blade from between the two overlapping portions of the strap, the joining plunger may be lifted in order to enable removal of the heating blade.

In some embodiments, the controller controls the temporal profile of the speed of rotation of the cam shaft.

In some embodiments, the controller receives a joining time as an input parameter and controls the speed of rotation of the cam shaft using the joining time.

In some embodiments, the controller sets a joining-time-dependent speed of rotation of the cam shaft using the joining time and controls the cam shaft to rotate with the joining-time-dependent speed of rotation such that the heating blade is inserted between the overlapping portions of the strap and removed therefrom by the cam shaft rotating with the joining-time-dependent speed of rotation.

In some embodiments, the controller sets a joining-time-dependent dwell time and controls the cam shaft to intermittently rotate the cam shaft, interrupting rotation over the dwell time such that the heating blade is holdable between the overlapping portions of the strap over the dwell time by the cam shaft.

### List of Figures

The present invention will be explained in more detail, by way of exemplary embodiments, with reference to the schematic drawing, in which:
- Fig. 1: shows a perspective view of a part of an embodiment of a strapping device;
- Fig. 2: shows a larger part of the strapping device of Fig.1;
- Fig. 3: shows a flow diagram of an embodiment of a method of operating a strapping device.

### Description of exemplary embodiments

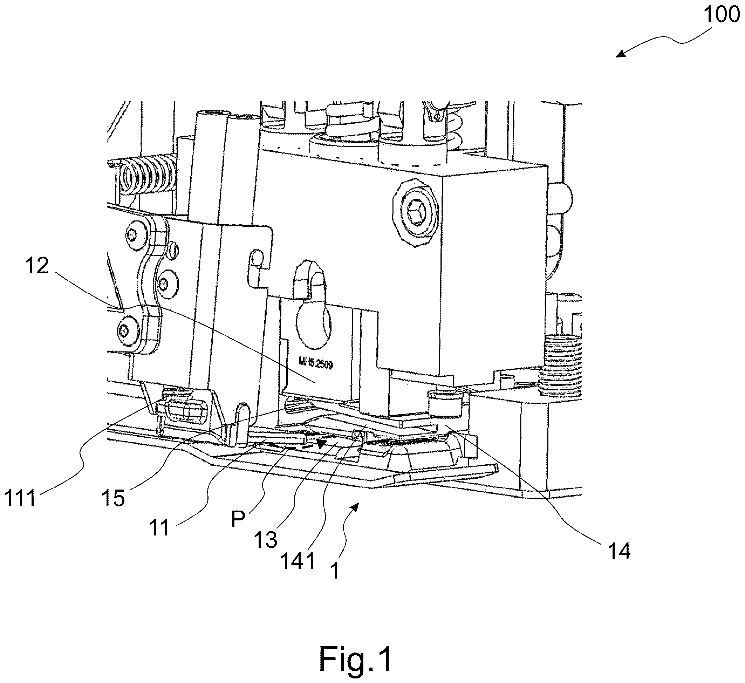

Figure 1 shows a perspective view of a part of an embodiment of a strapping device 100 comprising a tensioning apparatus (not visible in Figure 1) and a joining apparatus 1. The joining apparatus 1 comprises a heating blade 11, a joining plunger 12 and a joining base 13. The joining apparatus 1 further comprises a movable strap guider 14 having a strap guiding channel 141 through which a strap can be injected at the beginning of a strapping process. After injecting the strap from a strap injection channel 15 through the strap guiding channel 141, the strap can be guided around the one or more articles to be strapped such that two portions of the strap overlap at the position of the joining plunger 12 and the joining base 13, wherein an upper portion of the strap is positioned within the strap guiding channel 141 and a lower portion of the strap is positioned between an underside of the strap guider 14 and the joining base 13.

The heating blade 11 can then be heated and pivoted into the path of the strap between the two overlapping portions of the strap, i.e. between the upper portion of the strap and the lower portion of the strap, as indicated by the bent dashed arrow P in Figure 1. Before positioning of the heating blade 11 between the overlapping portions of the strap, the strap guider 14 can be moved away from the path of the strap.

The joining plunger 12 then moves downwards such that the upper portion of the strap is pressed onto the heating blade 11. Due to the vertical movability of the heating blade 11, the downward force of the joining plunger 12 also causes the heating blade 11 to be pressed onto the lower portion of the strap such that a sound contact of the heating blade 11 to both portions of the strap can be ensured. The vertical movability or flexibility of the heating blade 11 can be provided by a suitable mounting of the heating blade 11 wherein the heating blade 11 is supported by a spring 111 which allows the heating blade 11 to move back into its original vertical position once the joining plunger 12 is moved upwards to release the downward force on the heating blade 11.

After heating of the overlapping portions of the strap, the heating blade 11 can be pivoted back out of the path of the strap such that the overlapping portions of the strap may be brought into direct contact with each other. The joining plunger 12 can again be moved downwards in order to press the heated overlapping portions of the strap onto each other and to create a strap joint.

The joining plunger 12 can also be used as a cleaning plunger to press an upper portion of the strap onto the heating blade 11 and the heating blade 11 onto a lower portion of the strap in a cleaning cycle. The heating blade 11 can be heated to a cleaning temperature below a strap residue burn-off temperature while the upper portion and lower portion of the strap are pressed onto the heating blade 11 by the joining plunger 12. After the cleaning time, the joining plunger 12 is lifted and by removing the heating blade 11, residues can adhere to the strap resulting in a cleaned heating blade 11.

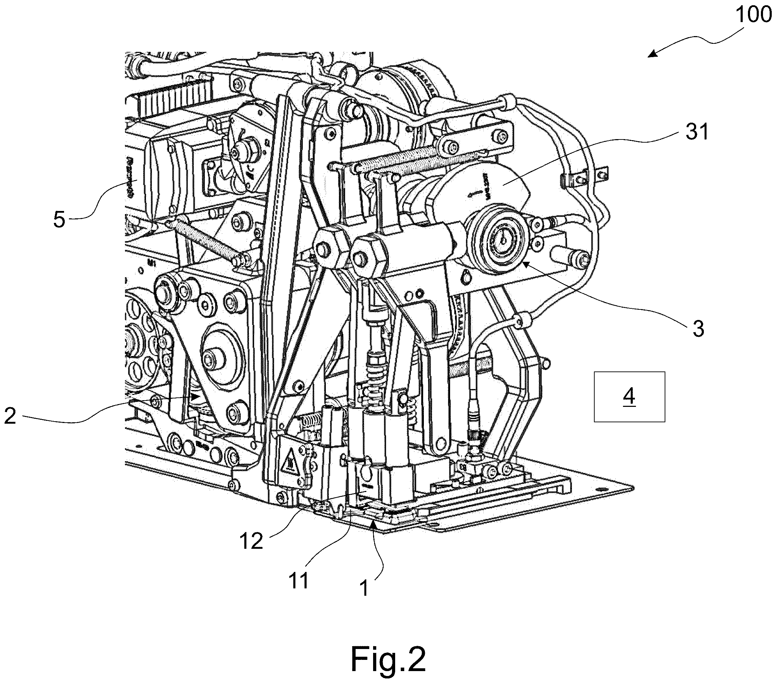

Figure 2 shows a larger part of the strapping device 100 of Figure 1 comprising a tensioning apparatus 2 with a tensioning wheel. The joining apparatus 1 with the heating blade 11 and the joining plunger 12 are indicated. The strapping device 100 further comprises a cam shaft 3 with a plurality of cams 31 by which components of the strapping device 100 as for example the joining plunger 12 and the heating blade 11 can be actuated. The cam shaft 3 is driven by a servomotor 5. A controller 4 is indicated in Figure 2 which controls the speed of rotation of the cam shaft 3 by controlling the servomotor 5. The controller 4 controls also the operating temperature of the heating blade 11. The controller 4 controlling the cam shaft 3 therefore comprises the controller 4 controlling the motor 5 driving the cam shaft 3.

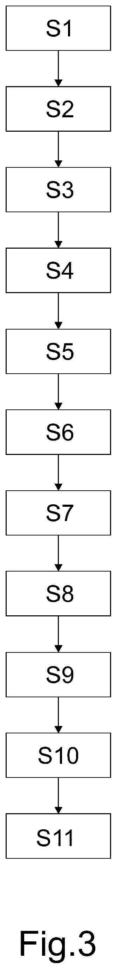

Figure 3 shows a flow diagram of an embodiment of a method of operating a strapping device. In step S1, the controller receives as an input, for example by a user through a user interface, a joining time characterizing the strap which is to be joined. In a variant, the user may input a strap type in step S1 based on which the controller determines a suitable joining time as stored for example on a data store of the strapping device.

In step S2, the controller sets a joining-time-dependent speed of rotation of the cam shaft. The joining-time-dependent speed of rotation may be a constant speed of rotation or a speed of rotation varying over time, thus a temporal profile of the speed of rotation. Depending on the joining time, the controller may also set a joining-time-dependent dwell time in step S2 for rotating the cam shaft intermittently.

In step S3, the strap is injected passing through a strap guiding channel of a strap guider at the joining apparatus and positioned around the one or more articles to be strapped.

In step S4, the strap is tensioned using the tensioning apparatus.

In step S5, the strap guider is removed from the path of the strap.

In step S6, the controller controls the heating blade such that the heating blade is heated to the operating temperature.

In step S7, the controller controls the cam shaft (or the motor driving the cam shaft, respectively) to rotate with the joining-time-dependent speed of rotation such that the heating blade is inserted between the overlapping portions of the strap with a speed according to the cam shaft rotating at the joining-time-dependent speed of rotation.

In step S8, the joining plunger presses the upper portion of the strap onto the heating blade and the heating blade onto the lower portion of the strap.

In step S9, the joining plunger is lifted.

In step S10, the heating blade is removed from between the overlapping portions of the strap.

In step S11, the joining plunger is lowered to press the overlapping portions of the strap onto each other in order to create a strap joint.

As mentioned above, the order of the steps S1-S11 can be changed if needed and feasible. Furthermore, additional steps may occur between the steps shown in Figure 3. For example, the strap is usually retracted until it lies against the one or more articles. This may occur after the step S3 of injecting the strap and before step S4 of tensioning the strap. In a further example, step S6 of heating the heating blade to the operating temperature may occur before step S3 of injecting the strap.

## Claims

1. A strapping device (100) for strapping one or more articles with a strap, comprising a tensioning apparatus (2) for tensioning the strap around the one or more articles, a joining apparatus (1) for joining two overlapping portions of the strap, wherein the joining apparatus (1) comprises a heating blade (11) insertable between the two overlapping portions of the strap and a joining plunger (12) configured to press the two overlapping portions of the strap onto each other, the strapping device (100) further comprising a cam shaft (3) operatively coupled with the heating blade (11) such that the heating blade (11) is movable by the cam shaft (3), a motor (5) operatively coupled with the cam shaft (3) and configured to drive the cam shaft (3), and a controller (4) connected with the motor (5) and configured to control the speed of rotation of the cam shaft (3), wherein the controller (4) is further connected with the heating blade (11) and configured to control an operating temperature of the heating blade (11).

2. The strapping device (100) according to claim 1, wherein the controller (4) is configured to control the temporal profile of the speed of rotation of the cam shaft (3).

3. The strapping device (100) according to claim 1 or 2, wherein the controller (4) is configured to receive a joining time as an input parameter and to control the speed of rotation of the cam shaft (3) using the joining time.

4. The strapping device (100) according to claim 3, wherein the controller (4) is configured to set a joining-time-dependent speed of rotation of the cam shaft (3) using the joining time, wherein the controller (4) is configured to control the cam shaft (3) to rotate with the joining-time-dependent speed of rotation such that the heating blade (11) is inserted between the overlapping portions of the strap and removed therefrom by the cam shaft (3) rotating with the joining-time-dependent speed of rotation.

5. The strapping device (100) according to claim 3 or 4, wherein the controller (4) is configured to set a joining-time-dependent dwell time, wherein the controller (4) is configured to control the cam shaft (3) to intermittently rotate the cam shaft (3), interrupting rotation over the dwell time such that the heating blade (11) is holdable between the overlapping portions of the strap over the dwell time by the cam shaft (3).

6. The strapping device (100) according to one of the preceding claims, wherein the controller (4) is configured to receive a strap-specific welding temperature and to set an operating temperature of the heating blade (11) below or to a strap-dependent threshold temperature using the strap-specific welding temperature.

7. The strapping device (100) according to one of the preceding claims, wherein the cam shaft (3) is operatively coupled with the joining plunger (12) such that the joining plunger (12) is movable by the cam shaft (3).

8. The strapping device (100) according to one of the preceding claims, wherein the controller (4) is configured to set the operating temperature of the heating blade (11) to a cleaning temperature below a strap residue burn-off temperature, preferably below a strap-specific welding temperature, wherein the strapping device (100) comprises a cleaning plunger (12) configured to press at least one of the overlapping portions of the strap onto the heating blade (11) over a cleaning time set by the controller (4).

9. The strapping device (100) according to claim 8, wherein the cleaning plunger (12) is configured to press at least one of the overlapping portions of the strap onto the heating blade (11) over a cleaning time set by the controller (4), wherein the cleaning time is longer than a joining time of the overlapping portions of the strap.

10. The strapping device (100) according to claim 8 or 9, wherein the cleaning plunger (12) is operatively coupled with the cam shaft (3).

11. The strapping device (100) according to one of the claims 8 to 10, wherein the joining plunger (12) is configured to press at least one of the overlapping portions of the strap onto the heating blade (11) over a cleaning time set by the controller (4).

12. A method of operating a strapping device (100) according to one of the preceding claims, comprising the steps of:
- Heating the heating blade (11) to an operating temperature;
- Inserting the heating blade (11) between two overlapping portions of the strap by moving the heating blade (11) by rotating the cam shaft (3) with a speed of rotation;
- Removing the heating blade (11) from between the two overlapping portions of the strap;
- Pressing the two overlapping portions of the strap onto each other by a joining plunger (12);
- Wherein the controller (4) controls the operating temperature of the heating blade (11) and the speed of rotation of the cam shaft (3).

13. The method according to claim 12, wherein the controller (4) controls the temporal profile of the speed of rotation of the cam shaft (3).

14. The method according to claim 12 or 13, wherein the controller (4) receives a joining time as an input parameter and controls the speed of rotation of the cam shaft (3) using the joining time.

15. The method according to claim 14, wherein the controller (4) sets a joining-time-dependent speed of rotation of the cam shaft (3) using the joining time and controls the cam shaft (3) to rotate with the joining-time-dependent speed of rotation such that the heating blade (11) is inserted between the overlapping portions of the strap and removed therefrom by the cam shaft (3) rotating with the joining-time-dependent speed of rotation.

16. The method according to claims 14 or 15, wherein the controller (4) sets a joining-time-dependent dwell time and controls the cam shaft (3) to intermittently rotate the cam shaft (3), interrupting rotation over the dwell time such that the heating blade (11) is holdable between the overlapping portions of the strap over the dwell time by the cam shaft (3).
